# EUROPÄISCHE PATENTSCHRIFT

(11) **EP 3 176 043 B1**
(45) Veröffentlichungstag und Bekanntmachung des Hinweises auf die Patenterteilung: **09.02.2022**
(21) Anmeldenummer: 16201681.0
(22) Anmeldetag: 01.12.2016
(51) Int. Cl.: B60T 13/22, B61H 13/00

(54) **EINRICHTUNG ZUM HILFSLÖSEN DRUCKMITTELBETRIEBENER BREMSEN EINES FAHRZEUGES**
DEVICE FOR AUXILIARY RELEASE OF FLUID ACTUATED VEHICLE BRAKES
DISPOSITIF DE DESSERRAGE AUXILIAIRE DE FREINS ACTIONNÉS PAR FLUIDE SOUS PRESSION D'UN VÉHICULE AUTOMOBILE

(30) Priorität: 03.12.2015 DE 102015121001
(43) Veröffentlichungstag der Anmeldung: 07.06.2017
(73) Patentinhaber: KNORR-BREMSE Systeme für Schienenfahrzeuge GmbH, 80809 München (DE)
(72) Erfinder: ARTRU, Philippe, 80797 München (DE); OBERPICHLER, Klaus, 80937 München (DE)

(56) Entgegenhaltungen:
- WO-A2-2006/125615
- DE-A1- 3 522 432
- DE-A1-102012 202 761

## Beschreibung

Die Erfindung betrifft eine Einrichtung zum Hilfslösen druckmittelbetriebener Bremsen eines Fahrzeuges, umfassend eine von einer elektronischen Bremssteuereinheit angesteuerte und von einer ersten Druckquelle versorgte Bremsdruckeinheit zur Druckmittelbetätigung mindestens eines passiven Bremsaktuators des Fahrzeuges, wobei Hilfslösemittel zum Lösen des mindestens einen passiven Bremsaktuators bei Ausfall eines Betriebsbremskreises vorgesehen sind.

Das Einsatzgebiet der Erfindung erstreckt sich vornehmlich auf den Schienenfahrzeugbau, insbesondere auf schienengebundene Nahverkehrsmittel, wie beispielsweise Straßenbahnen. Die Räder der hier interessierenden Fahrzeuge werden über passive Bremsaktuatoren betätigt. Die Bremsen sind vorzugsweise als Scheibenbremsen ausgebildet, welche über einen Bremssattel oder eine Bremszange hydraulisch betätigt werden. Bei einem derartigen passiven Bremsaktuator erfolgt das Bremsen und Lösen über eine gegenläufige Druckmittelbeaufschlagung eines zugeordneten Federspeicherzylinders. Im drucklosen Zustand bremst der Federspeicherzylinder mittels Federkraft selbsttätig ein. Diese Funktionalität erfordert Hilfslösemittel, um den passiven Bremsaktuator bei Ausfall des normalen Betriebsbremskreises lösen zu können, damit das Fahrzeug bewegbar - beispielsweise abschleppbar - ist. Ein Ausfall des Betriebsbremskreises kann eintreten, wenn es im Schadensfall nicht mehr möglich ist, über die normale elektronische Bremsansteuerung mit der Bremsdruckeinheit die passiven Bremsaktuatoren zu lösen.

Gemäß des allgemein bekannten Standes der Technik wird zum Hilfslösen eines passiven Bremsaktuators eine separate Druckquelle verwendet, welche über einen neben der ersten Druckquelle an der Bremsdruckeinheit vorgesehenen Anschluss einen Hilfsdruck zur Verfügung stellt, womit ein in der Bremsdruckeinheit integrierter separater Hilfsdruckkreis H mit Druckmittel versorgt wird. Dies bedeutet, dass neben dem normalen Betriebsbremskreis P der weitere Hilfsdruckkreis H vorhanden ist. Für den Hilfsdruckkreis H weist die Bremsdruckeinheit einen separaten Auslassanschluss auf, um die zugeordneten Bremsaktuatoren per Hilfsdruck bei Bedarf anzusteuern. Hierfür ist in den Federspeicherzylindern der Bremsaktuatoren gewöhnlich ein dem Hilfsdruck zugeordneter separater Kolben vorgesehen, über welchen das Hilfslösen des Bremsaktuators durchgeführt wird. Das Hilfslösen erfolgt also per separatem Hilfslösekreis H durch entsprechenden Druckaufbau im passiven Bremsaktuator.

Die WO 2006/125615 A offenbart eine technische Lösung für eine Bremsansteuerung, bei welcher eine von einer elektronischen Bremssteuereinheit ansteuerbare und von einer ersten Druckwelle versorgbare Bremsdruckeinheit zur Druckmittelbetätigung eines passiven Bremsaktuators vorgesehen ist. Darüber hinaus sind Hilfslösemittel zum Lösen des passiven Bremsaktuators bei Ausfall einer normalen Ansteuerung vorgesehen, welche ein von einer zweiten Druckwelle gespeistes Umschaltventil umfassen.

Es ist die Aufgabe der vorliegenden Erfindung ein zuverlässiges Hilfslösen eines passiven Bremsaktuators mit einfachen technischen Mitteln zu ermöglichen.

Die Aufgabe wird ausgehend von einer Einrichtung zum Hilfslösen druckmittelbetriebener Bremsen gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Hilfslösemittel eine zugeordnete zweite Druckquelle umfassen, welche über ein Umschaltventil direkt mit dem Betriebsbremskreis P verbindbar ist, wobei das Umschaltventil von einer separaten Hilfslösesteuerung aus betätigbar ist.

Mit anderen Worten bedeutet dies, dass sich die zweite den Hilfsdruck beinhaltende Druckquelle ventilgesteuert direkt mit dem Betriebsbremskreis P verbinden lässt. Insoweit entfällt ein ansonsten üblicher Hilfsbremskreis. Die angeschlossenen Bremsaktuatoren brauchen auch keine Bremszylinder mit separatem Kolben für eine Hilfsdruckbeaufschlagung aufzuweisen, da das Hilfslösen über den normalen Bremskolben des Bremszylinders entgegen der hierauf außerdem einwirkenden Federkraft des Federspeichers wirkt.

Die erfindungsgemäße Lösung ist gemäß einer bevorzugten Ausführungsform hydraulisch ausgeführt und beinhaltet insoweit eine erste und zweite hydraulische Druckquelle, welche beispielsweise als Membrandruckspeicher ausgeführt sein können. Daneben ist es auch möglich, die in Druckquellen als hydraulische Motorpumpen, also ohne Speicherbehälter, auszuführen. Dementsprechend ist die Bremsdruckeinheit vorzugsweise als ein Hydrogerät ausgebildet, welches verschiedene elektromagnetisch betätigbare hydraulische Mehrwegeventile zur Drucksteuerung des angeschlossenen Betriebsbremskreises enthält. Das Hydrogerät wird elektrisch über die zentrale elektronische Bremssteuereinheit angesteuert. Daneben ist das ebenfalls vorzugsweise direkt integrierte Umschaltventil der separaten Hilfslösemittel durch die separate Hilfslösesteuerung vorzugsweise elektrisch ansteuerbar. Es ist jedoch auch eventuell möglich, das Umschaltventil manuell zum Hilfslösen zu betätigen.

Gemäß einer weiteren die Erfindung verbessernden Maßnahme wird vorgeschlagen, dass das Umschaltventil als 3/2-Wegeventil ausgebildet ist, welches im unbestromten Zustand den Betriebsbremskreis mit der ersten Druckquelle verbindet. Dies bedeutet, dass nach manueller oder elektrischer Betätigung über die Hilfslösesteuerung das Umschaltventil im entsprechend bestromten Zustand eine Verbindung von der zweiten Druckquelle zum Betriebsbremskreis herstellt, um das Hilfslösen einzuleiten.

Vorzugsweise ist die Ventiltechnik der erfindungsgemäßen Einrichtung vollständig in das Bremsdruckgerät integriert und dieses weist am Gerätegehäuse einen ersten sowie zweiten Einlassanschluss zur Verbindung mit der ersten beziehungsweise zweiten Druckquelle auf. Weiterhin ist lediglich nur noch ein einziger Auslassanschluss am Gerätegehäuse des Bremsdruckgerätes erforderlich, um die Verbindung mit dem Betriebsbremskreis herzustellen, worüber neben der normalen Betriebsbremsung auch das Hilfslösen der angeschlossenen passiven Bremsaktuatoren durchgeführt wird. Ein weiterer Auslassanschluss für einen weiteren Bremskreis kann insoweit entfallen.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein schematisches Blockschaltbild einer Einrichtung zum Hilfslösen druckmittelbetriebener Bremsen über den Betriebskreis und
- Figur 2: ein Schaltbild der in einem Hydrogerät als Bremsdruckeinheit implementierten Ventilfunktionalität.

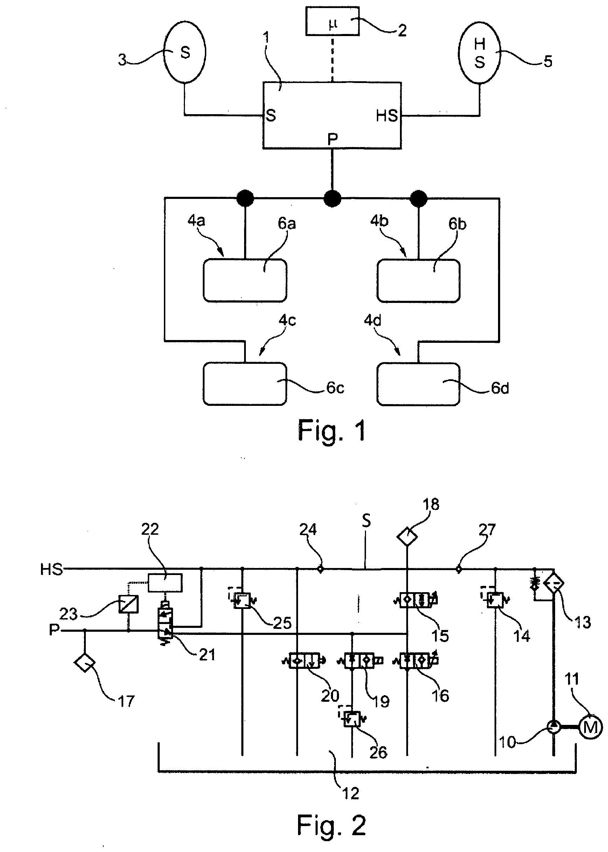

Gemäß Figur 1 umfasst eine Einrichtung zum Hilfslösen druckmittelbetriebener Bremsen eines - nicht weiter dargestellten - Schienenfahrzeuges eine als Hydrogerät ausgebildete Bremsdruckeinheit 1, welche von einer zentralen elektronischen Bremssteuereinheit 2 angesteuert wird. An einem ersten Einlassanschluss S der Bremsdruckeinheit 1 ist eine erste Druckquelle 3 angeschlossen, welche als hydraulischer Druckspeicher in Form eines Membrandruckspeichers ausgebildet ist und den hydraulischen Druck für die Betriebsbremsung des Fahrzeuges bevorratet.

Zur Betriebsbremsung des Fahrzeuges sind insgesamt vier passive Bremsaktuatoren 4a bis 4d vorgesehen, welche je einem Rad des Fahrzeuges zugeordnet sind und bei diesem Ausführungsbeispiel als Scheibenbremsen mit hydraulisch betätigtem Bremssattel ausgebildet sind. Die hydraulische Betätigung der passiven Bremsaktuatoren 4a bis 4d erfolgt über einen Betriebsbremskreis, dem ein Auslassanschluss P an der Bremsdruckeinheit 1 zugeordnet ist.

Weiterhin sind Hilfslösemittel zum Lösen der Bremsaktuatoren 4a bis 4d bei Ausfall des Betriebsbremskreises vorgesehen. Die Hilfslösemittel beinhalten eine zweite Druckquelle 5, welche ebenfalls als Membrandruckspeicher ausgebildet ist und über einen Einlassanschluss HS am Bremsdruckgerät 1 angeschlossen ist. Im Bremssattel 6a bis 6d jedes passiven Bremsaktuators 4a bis 4d ist ein - nicht im Detail gezeigter - Federspeicherzylinder integriert, welcher per Druckbeaufschlagung in Federwirkrichtung den Bremssattel 6a bis 6d betätigt und per Beaufschlagung entgegen der Federwirkung den Bremssattel 6a bis 6d während der Betriebsbremsung löst.

Die Figur 2 veranschaulicht die im Bremsdruckgerät 1 integrierte Ventiltechnik. Eine Hydraulikpumpe 10 wird von einem Motor 11 angetrieben, um Hydrauliköl ausgehend von einem Ölsumpf 12 zu fördern und einem Hydraulikkreis über einen Filter 13 zuzuführen. Ein Mindestdruckventil 14 dient als Überlastungsschutz und führt einen Überdruck wieder zurück in den Ölsumpf 12. Über den Einlassanschluss S ist der - nicht weiter dargestellte - hydraulische Druckspeicher der ersten Druckquelle 3 angeschlossen. Ein Rückschlagventil 27 verhindert ein Rückströmen des gepumpten Hydrauliköls. Ein Mehrwegeventil 15 dient durch elektromagnetische Betätigung über die - ebenfalls nicht dargestellte - elektronische Bremssteuereinheit 2 einem Druckaufbau im Betriebsbremskreis mit dem Auslassanschluss P an der Bremsdruckeinheit 1. Das gegenüberliegende Mehrwegeventil 16 dient einem Druckabbau in diesem Betriebsbremskreis. Somit lässt sich über die beiden Mehrwegeventile 15 und 16 der gewünschte Druck im Betriebsbremskreis einstellen. Ein zugeordneter Drucksensor 17 gibt für die Bremssteuereinheit 2 ein Signal für den momentanen Druck im Betriebsbremskreis aus. Des Weiteren ist ein Drucksensor 18 ausgangsseitig des Rückschlagventils 27 vorgesehen, um den von der Hydraulikpumpe 10 erzeugten Versorgungsdruck zu messen und ebenfalls zu Steuerungszwecken an die elektronische Bremssteuereinheit 2 weiterzugeben.

Das im Fehlerfall stromlos geschaltete Mehrwegeventil 19 am Betriebsbremskreis öffnet, um den Druck mittels Bremskreis zum Ölsumpf 12 hin abzubauen, so dass die Bremsen im Fehlerfall durch die Speicherfeder betätigt werden. Ein weiteres Mehrwegeventil 20 dient Wartungszwecken und ist manuell betätigbar, um das System in einen drucklosen Zustand zu versetzen.

Die Hilfslösemittel werden durch die - hier nicht dargestellte - zweite Druckquelle 5 über den Einlassanschluss HS mit dem Hilfsdruck versorgt, welcher im Bedarfsfall über ein Umschaltventil 21 direkt mit dem Betriebsbremskreis verbindbar ist. Das Umschaltventil 21 ist von einer separaten Hilfslösesteuerung 22 aus betätigbar, welche unabhängig von der zentralen elektronischen Bremssteuereinheit 2 ausgebildet ist. Das Umschaltventil 21 ist ein 3/2-Wegeventil, das in der unbetätigten Schaltposition einen Druckauf- und -abbau im Betriebsbremskreis am Auslassanschluss P zulässt und im betätigten Schaltzustand den am zweiten Einlassanschluss HS anstehenden Hilfsdruck in den Betriebsbremskreis gibt, um ein Hilfslösen der druckmittelbetriebenen passiven Bremsaktuatoren zu ermöglichen. Zur Erkennung des ventilauslassseitigen Druckstatus ist ein Druckschalter 23 vorgesehen, welcher mit der Hilfslösesteuerung 22 in Verbindung steht, um festzustellen, ob die passiven Bremsaktuatoren in den hilfsgelösten Zustand gelangt sind. Daneben ist in die vom zweiten Einlassanschluss HS beaufschlagte Druckmittelleitung auf der Seite der durch die Hydraulikpumpe 10 ausgeführten Druckversorgung eine Rücklaufsperre in Form eines Rückschlagventils 24 eingefügt. Das Rückschlagventil 24 verhindert ein Rückströmen des am Einlassanschluss HS anliegenden Hilfslösedrucks in dem Betriebsbremskreis. Der Hilfslösedruck lässt sich über ein Mindestdruckventil 25 als Überlastungsschutz zum Ölsumpf 12 hin absichern.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, das Umschaltventil 21 manuell zu betätigen, so dass anstelle einer elektronischen Hilfslöseeinrichtung 12 eine manuelle Hilfslöseeinrichtung in Form eines Betätigungsknopfes am Umschaltventil 21 vorgesehen ist.

### BEZUGSZEICHENLISTE

- 1: Bremsdruckeinheit
- 2: Bremssteuereinheit
- 3: erste Druckquelle
- 4: Bremsaktuator
- 5: zweite Druckquelle
- 6: Bremssattel
- 10: Hydraulikpumpe
- 11: Motor
- 12: Ölsumpf
- 13: Filter
- 14: Mindestdruckventil
- 15: Mehrwegeventil
- 16: Mehrwegeventil
- 17: Drucksensor
- 18: Drucksensor
- 19: Mehrwegeventil
- 20: Mehrwegeventil
- 21: Mehrwegeventil
- 22: Hilfslösesteuerung
- 23: Druckschalter
- 24: Rückschlagventil
- 25: Mindestdruckventil
- 26: Mindestdruckventil
- 27: Rückschlagventil

- S: erster Einlassanschluss für erste Druckquelle 3
- HS: zweiter Einlassanschluss für zweite Druckquelle 5
- P: Auslassanschluss für Betriebsbremskreis

## Patentansprüche

1. Einrichtung zum Hilfslösen druckmittelbetriebener Bremsen eines Fahrzeuges, umfassend eine von einer elektronischen Bremssteuereinheit (2) ansteuerbare und von einer ersten Druckquelle (3) versorgbare Bremsdruckeinheit (1), die zur Druckmittelbetätigung mindestens eines passiven Bremsaktuators (4a-4d) des Fahrzeuges einen Betriebsbremskreis umfasst, wobei in der Einrichtung Hilfslösemittel zum Lösen des mindestens einen passiven Bremsaktuators (4a-4d) bei Ausfall einer normalen Ansteuerung des Betriebsbremskreises vorgesehen sind, wobei die Hilfslösemittel eine zugeordnete zweite Druckquelle (5) umfassen, welche über ein Umschaltventil (21) direkt mit dem Betriebsbremskreis verbunden ist, **dadurch gekennzeichnet, dass** das Umschaltventil (21) von einer separaten Hilfslösesteuerung (22) zu betätigen ist, wobei das Umschaltventil (21) im unbestromten Zustand den Betriebsbremskreis mit der ersten Druckquelle (3) verbindet.

2. Einrichtung nach Anspruch 1,
**dadurch gekennzeichnet, dass** das Umschaltventil (21) als ein in die Bremsdruckeinheit (1) integriertes manuell oder elektromagnetisch betätigbares 3/2-Wegeventil ausgebildet ist.

3. Einrichtung nach Anspruch 1,
**dadurch gekennzeichnet, dass** die erste Druckquelle (3) und die zweite Druckquelle (5) mit einem je zugeordneten Einlassanschluss (S; HS) der Bremsdruckeinheit (1) verbunden sind.

4. Einrichtung nach Anspruch 1,
**dadurch gekennzeichnet, dass** die Bremsdruckeinheit (1) mit einem einzigen Auslassanschluss (P) zur Verbindung mit dem Betriebsbremskreis ausgestattet ist.

5. Einrichtung nach einem der vorstehenden Ansprüche,
**dadurch gekennzeichnet, dass** die Druckquellen (3; 5) jeweils als ein hydraulischer Druckspeicher und/oder als eine hydraulische Motor- oder Handpumpe ausgebildet sind.

6. Einrichtung nach Anspruch 5,
**dadurch gekennzeichnet, dass** die Bremsdruckeinheit (1) als ein Hydrogerät ausgebildet ist, umfassend elektromagnetisch betätigbare hydraulische Mehrwegeventile (15, 16, 19, 20, 21) zur Drucksteuerung des angeschlossenen Betriebsbremskreises.

7. Einrichtung nach einem der vorstehenden Ansprüche,
**dadurch gekennzeichnet, dass** der passive Bremsaktuator (4a-4d) einen Federspeicherzylinder zur Betätigung eines zugeordneten Bremssattels (6a-6d) umfasst, wobei der Federspeicherzylinder per Druckbeaufschlagung in Federwirkrichtung den Bremssattel (6a-6d) betätigt und per Beaufschlagung entgegen der Federwirkrichtung den Bremssattel (6a-6d) löst.

## Claims

1. Device for the auxiliary release of pressure-medium-operated brakes of a vehicle, comprising a brake pressure unit (1) which is controllable by an electronic brake control unit (2) and to which a supply can be provided by a first pressure source (3) and which comprises a service brake circuit for actuating, by pressure medium, at least one passive brake actuator (4a-4d) of the vehicle, wherein, in the device, there are provided auxiliary release means for releasing the at least one passive brake actuator (4a-4d) in the event of failure of normal control of the service brake circuit, wherein the auxiliary release means comprise an associated second pressure source (5) which is connected directly to the service brake circuit via a switching valve (21),
**characterized in that** the switching valve (21) is provided for actuation by a separate auxiliary release controller (22), wherein the switching valve (21), in the electrically deenergized state, connects the service brake circuit to the first pressure source (3).

2. Device according to Claim 1,
**characterized in that** the switching valve (21) is in the form of a manually or electromagnetically actuatable 3/2 directional valve which is integrated into the brake pressure unit (1).

3. Device according to Claim 1,
**characterized in that** the first pressure source (3) and the second pressure source (5) are connected to a respectively associated inlet connection (S; HS) of the brake pressure unit (1).

4. Device according to Claim 1,
**characterized in that** the brake pressure unit (1) is equipped with a single outlet connection (P) for connection to the service brake circuit.

5. Device according to any one of the preceding claims,
**characterized in that** the pressure sources (3; 5) are in each case in the form of a hydraulic pressure accumulator and/or in the form of a hydraulic motor-operated or manually operated pump.

6. Device according to Claim 5,
**characterized in that** the brake pressure unit (1) is in the form of a hydraulic device, comprising electromagnetically actuatable hydraulic multi-way valves (15, 16, 19, 20, 21) for controlling the pressure of the connected service brake circuit.

7. Device according to any one of the preceding claims,
**characterized in that** the passive brake actuator (4a-4d) comprises a spring-type brake cylinder for actuating an associated brake calliper (6a-6d), wherein the spring-type brake cylinder actuates the brake calliper (6a-6d) by exertion of pressure load in a direction of spring action and releases the brake calliper (6a-6d) by exertion of load counter to the direction of spring action.

## Revendications

1. Dispositif de desserrage auxiliaire de freins actionnés par fluide sous pression d'un véhicule, comprenant une unité (1) de pression de frein, qui peut être commandée par une unité (2) de commande électronique de frein, qui peut être alimentée par une première source (3) de pression et qui comprend, pour l'actionnement par fluide sous pression d'au moins un actionneur (4a-4b) de frein passif du véhicule, un circuit de frein de service, dans lequel il est prévu dans le dispositif des moyens de serrage auxiliaire pour desserrer le au moins un actionneur (4a-4d) de frein passif si une commande normale de circuit de frein de service est défaillante, dans lequel les moyens de desserrage auxiliaire comprennent une deuxième source (5) de pression associée, qui est en communication directe avec le circuit de frein de service par une soupape (21) d'inversion,
**caractérisé en ce que** cette soupape (21) d'inversion peut être actionnée par une commande (22) de desserrage auxiliaire distincte, la soupape (21) d'inversion communiquant avec la première source (3) de pression dans l'état non alimenté du circuit de frein de service.

2. Dispositif suivant la revendication 1,
**caractérisé en ce que** la soupape (21) d'inversion est constituée sous la forme d'une soupape à 3/2 voies intégrée dans l'unité (1) de pression de frein et pouvant être actionnée manuellement ou électromagnétiquement.

3. Dispositif suivant la revendication 1,
**caractérisé en ce que** la première source (3) de pression et la deuxième source (5) de pression communiquent avec un raccord (S ; HS) d'entrée associé respectivement de l'unité (1) de pression de frein.

4. Dispositif suivant la revendication 1,
**caractérisé en ce que** l'unité (1) de pression de frein est équipée d'un raccord (P) unique de sortie pour la liaison au circuit de frein de service.

5. Dispositif suivant l'une des revendications précédentes,
**caractérisé en ce que** les sources (3, 5) de pression sont constituées chacune sous la forme d'un accumulateur de pression hydraulique et/ou sous la forme d'une pompe hydraulique motorisée ou manuelle.

6. Dispositif suivant la revendication 5,
**caractérisé en ce que** l'unité (1) de pression de frein est constituée sous la forme d'un hydroappareil comprenant des soupapes (15, 16, 19, 20, 21) hydrauliques à plusieurs voies, pouvant être actionnées électromagnétiquement pour commander la pression dans le circuit de frein de service raccordé.

7. Dispositif suivant l'une des revendications précédentes,
**caractérisé en ce que** l'actionneur (4a-4d) de frein passif comprend un cylindre à ressort accumulateur pour l'actionnement d'un étrier (6a-6d) de frein associé, dans lequel le cylindre à ressort accumulateur actionne, par alimentation en pression dans le sens d'action du ressort, l'étrier (6a-6d) de frein et desserre l'étrier (6a-6b) de frein par alimentation dans le sens contraire au sens d'action du ressort.
